# EUROPEAN PATENT APPLICATION

(11) **EP 3 309 403 A1**
(43) Date of publication of application: **18.04.2018**
(21) Application number: 17195925.7
(22) Date of filing: 11.10.2017
(51) Int. Cl.: F04D 27/02, F02C 9/18, F02C 9/52, F02C 9/54

(54) **SYSTEMS AND METHODS TO CONTROL PERFORMANCE VIA CONTROL OF COMPRESSOR OLL PROTECTION ACTIONS**

(30) Priority: 11.10.2016 US 201615290273
(71) Applicant: General Electric Company, Schenectady, NY 12345 (US)
(72) Inventor: MATHAI, George Vargese, Atlanta, GA Georgia 30339 (US); KLOSINSKI, Joseph Philip, Atlanta, GA Georgia 30339-8402 (US); EKANAYAKE, Sanji, Atlanta, GA Georgia 30339 (US); SCIPIO, Alston Ilford, Atlanta, GA Georgia 30339 (US)
(74) Representative: Foster, Christopher Michael

(57) **Abstract**

Systems and methods to control performance via control of compressor operating limit line (OLL) protection actions are disclosed. According to an embodiment of the disclosure, a method (1100) of controlling a turbine (160) in a power plant (105) can be provided. The method (1100) may include receiving (1110) a selection of a desired performance parameter (190) associated with an operational mode (410) of a power plant (105); receiving (1120) a set of measured performance parameters at a current operating condition (195) of a turbine (160) associated with the power plant (105); receiving (1130) an operating limit line (OLL) (540) of a compressor (110) associated with the turbine (160); and receiving (1140) a compressor pressure ratio (CPR) at the current operating condition (530) of the turbine (160). The method (1100) may further include: comparing (1150) the CPR (530) to an operating limit pressure ratio on the OLL at the current operating condition of the turbine; based at least in part on the comparison, a difference between the CPR (530) and the operating limit pressure ratio exceeding a predetermined threshold can be determined (1160); and based at least in part on the difference between the CPR (530) and the operating limit pressure ratio, the selection of the desired performance parameter (190), and the set of measured performance parameters (195), one or more response actions (450) via a control system (180) of the turbine (160) can be implemented (1170).

## Description

### TECHNICAL FIELD

Embodiments of this disclosure generally relate to power plants, and more specifically, to systems and methods to control power plant performance via control of compressor operating limit line (OLL) protection actions.

### BACKGROUND

A power plant can include one or more turbines, such as, for example, a gas turbine and/or a steam turbine. A gas turbine can typically include a compressor, a combustor, a turbine section, and a generator that can be connected to a power grid. The compressor and combustor can produce pressurized gas that can be transmitted to the turbine where the pressurized gas is converted to mechanical energy.

A controller associated with the power plant can manage gas turbine operation to ensure that the compressor can be protected from surge. Compressor protection actions to keep the compressor operating within an operating limit line (OLL) can have varying levels of impact on power plant performance. Typical power plant performance parameters can include power output, heat rate, which is a measure of efficiency, exhaust energy, steam production, and so on.

### BRIEF DESCRIPTION OF THE DISCLOSURE

Some or all of the above needs and/or problems may be addressed by certain embodiments of the disclosure. Certain embodiments may include systems and methods to control power plant performance via control of compressor operating limit line (OLL) protection actions. According to one embodiment of the disclosure, a method of controlling a turbine in a power plant can be provided. The method may include receiving a selection of a desired performance parameter associated with an operational mode of a power plant; receiving a set of measured performance parameters at a current operating condition of a turbine associated with the power plant; receiving an operating limit line (OLL) of a compressor associated with the turbine; and receiving a compressor pressure ratio (CPR) at the current operating condition of the turbine. The method may further include: comparing the CPR to an operating limit pressure ratio on the OLL at the current operating condition of the turbine; based at least in part on the comparison, a difference between the CPR and the operating limit pressure ratio exceeding a predetermined threshold can be determined; and based at least in part on the difference between the CPR and the operating limit pressure ratio, the selection of the desired performance parameter, and the set of measured performance parameters, one or more response actions via a control system of the turbine can be implemented.

According to another embodiment of the disclosure, a system can be provided. The system may include at least one turbine. The system can also include a controller in communication with the at least one turbine. The system can also include a memory with instructions executable by a computer for performing operations that can include: receiving a selection of a desired performance parameter associated with an operation of a power plant; receiving a set of measured performance parameters at a current operating condition of the at least one turbine associated with the power plant; receiving an operating limit line (OLL) of a compressor associated with the at least one turbine; receiving a compressor pressure ratio (CPR) at the current operating condition of the at least one turbine; comparing the CPR to an operating limit pressure ratio on the OLL at current operating conditions; based at least in part on the comparison, a difference between the CPR and the operating limit pressure ratio exceeding a predetermined threshold can be determined; and based at least in part on the difference between the CPR and the operating limit pressure ratio, the selection of the desired performance parameter, and the set of measured performance parameters, one or more response actions can be implemented via a control system of the at least one turbine.

According to another embodiment of the disclosure, a non-transitory computer-readable medium can be provided. The non-transitory computer-readable medium can include instructions executable by a computer for performing operations that can include, receiving a selection of a desired performance parameter associated with an operational mode of a power plant; receiving a set of measured performance parameters at a current operating condition of a turbine associated with the power plant; receiving an operating limit line (OLL) of a compressor associated with the turbine; receiving a compressor pressure ratio (CPR) at the current operating condition of the turbine; comparing the CPR to an operating limit pressure ratio on the OLL at the current operating condition of the turbine; based at least in part on the comparison, a difference between the CPR and the operating limit pressure ratio exceeding a predetermined threshold can be determined; and based at least in part on the difference between the CPR and the operating limit pressure ratio, the selection of the desired performance parameter, and the set of measured performance parameters, one or more response actions via a control system of the turbine can be implemented.

Other embodiments, features, and aspects of the disclosure will become apparent from the following description taken in conjunction with the following drawings.

### BRIEF DESCRIPTION OF THE DRAWINGS

Having thus described the disclosure in general terms, reference will now be made to the accompanying drawings, which are not necessarily drawn to scale, and wherein:
FIG. 1 is a block diagram illustrating an example environment in which certain systems and methods to control performance via control of compressor OLL protection actions can be implemented, according to an example embodiment of the disclosure.
FIG. 2 illustrates an example combined cycle or cogeneration system environment in which certain systems and methods to control performance via control of compressor OLL protection actions can be implemented, according to an example embodiment of the disclosure.
FIG. 3 illustrates an example simple cycle system environment in which certain systems and methods to control performance via control of compressor OLL protection actions can be implemented, according to an example embodiment of the disclosure.
FIG. 4 is a block diagram illustrating an additional example environment in which certain systems and methods to control performance via control of compressor OLL protection actions can be implemented, according to an example embodiment of the disclosure.
FIG. 5 illustrates a graph of compressor pressure ratio (CPR) as a function of speed corrected airflow through the compressor, according to an example embodiment of the disclosure.
FIG. 6 illustrates a graph of gas turbine power and gas turbine power delta in percentage as functions of ambient temperature for an example implementation of certain systems and methods to control performance via control of compressor OLL protection actions, according to an example embodiment of the disclosure.
FIG. 7 illustrates a graph of gas turbine heat rate and gas turbine heat rate delta in percentage as functions of ambient temperature for an example implementation of certain systems and methods to control performance via control of compressor OLL protection actions, according to an example embodiment of the disclosure.
FIG. 8 illustrates a graph of gas turbine heat rate delta in percentage as a function of gas turbine power in percentage for different ambient temperatures in an example implementation of certain systems and methods to control performance via control of compressor OLL protection actions, according to an example embodiment of the disclosure.
FIG. 9 illustrates a graph of gas turbine exhaust energy and gas turbine exhaust energy delta in percentage as functions of ambient temperature for an example implementation of certain systems and methods to control performance via control of compressor OLL protection actions, according to an example embodiment of the disclosure.
FIG. 10 illustrates a graph of gas turbine exhaust energy delta in percentage as a function of gas turbine power in percentage for different ambient temperatures in an example implementation of certain systems and methods to control performance via control of compressor OLL protection actions, according to an example embodiment of the disclosure.
FIG. 11 is a block diagram illustrating an additional example environment in which certain systems and methods to control performance via control of compressor OLL protection actions can be implemented, according to an example embodiment of the disclosure.
FIG. 12 is an example controller in which certain systems and methods to control performance via control of compressor OLL protection actions can be implemented, according to another example embodiment of the disclosure.

### DETAILED DESCRIPTION

The following detailed description includes references to the accompanying drawings, which form part of the detailed description. The drawings depict illustrations, in accordance with example embodiments. These example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. The following detailed description is, therefore, not to be taken in a limiting sense, and the scope is defined by the appended claims and their equivalents. Like numbers refer to like elements throughout.

Certain embodiments described herein relate to systems and methods to control performance via control of compressor OLL protection actions. For example, as will be described in greater detail herein, a selection of a desired performance parameter associated with an operational mode of the power plant can be received. Also, a set of measured performance parameters at a current operating condition of a turbine associated with the power plant may be received. Furthermore, an operating limit line (OLL) of a compressor associated with the turbine and a compressor pressure ratio (CPR) at the current operating condition of the turbine can be received. The CPR can be compared to an operating limit line pressure ratio on the OLL at the current operating condition of the turbine. Based at least in part on the comparison, a difference between the CPR and the operating limit pressure ratio exceeding a predetermined threshold can be determined. Furthermore, based at least in part on the difference between the CPR and the operating limit pressure ratio, the selection of the desired performance parameter, and the set of measured performance parameters, one or more response actions can be implemented via a control system of the turbine.

One or more technical effects associated with certain embodiments herein may include, but are not limited to, increased operational flexibility of a power plant or gas turbine. Having increased operational flexibility in the gas turbine or power plant can enable a customer to operate the gas turbine or power plant based on changes in ambient conditions, grid constraints, and so on. The following provides the detailed description of various example embodiments related to systems and methods to control performance via control of compressor OLL protection actions.

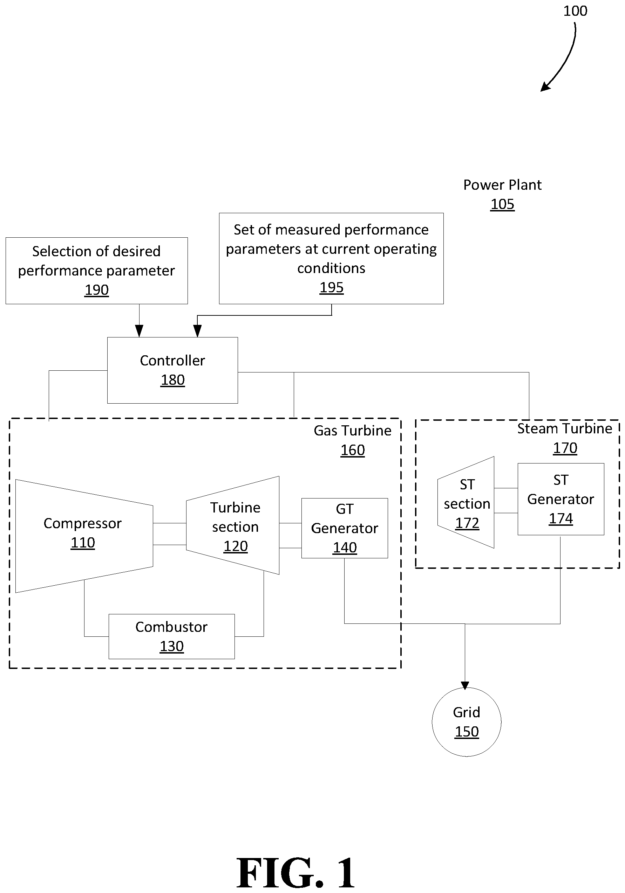

FIG. 1 depicts an example system 100 to implement certain methods and systems to control a turbine in a power plant 105, such as a gas turbine 160 or a steam turbine 170. According to an example embodiment of the disclosure, the system 100 may include a power plant 105 that may include one or more gas turbines 160 that can produce power, one or more steam turbines 170 that can produce power, one or more controllers 180 that can control the power plant 105 and/or the gas turbine 160 and the steam turbine 170, and a grid 150 that can receive and transmit the power from a gas turbine generator (GT generator 140) and a steam turbine generator (ST generator 174). The gas turbine 160 can further include a compressor section 110 that can compress ambient air (not shown) that can be delivered to a combustor 130, where fuel can be added (not shown) for combustion to occur. High pressure products of combustion can be expanded through the turbine section 120 to generate power at the GT generator 140 and the resultant exhaust energy (not shown) can be further recovered in a heat recovery steam generator (HRSG, not shown in FIG. 1). The steam turbine 170 includes at least one ST section 172 that can expand high pressure steam from the HRSG (not shown) to generate power at the ST generator 174.

The controller 180 can be in communication with the power plant 105, the gas turbine 160 and the steam turbine 170. The controller 180 can also receive input from power plant operators, such as, for example, a selection of desired performance parameter 190. Furthermore, the controller 180 can receive operational data from the power plant components, such as, for example, gas turbine data and steam turbine data.

According to an embodiment of the disclosure, the controller 180 can include memory with computer-readable instructions that can receive the selection of the desired performance parameter 190 associated with an operational mode of the power plant 105. The selection of the desired performance parameter 190 can be made by an operator at the power plant or it can be made remotely. The operational mode of the power plant can include a combined cycle mode, where the gas turbine 160 can be coupled with the steam turbine 170 to produce combined power that can be delivered to the grid 150, a simple cycle mode where the gas turbine 160 alone can produce power that can be delivered to the grid 150, or a cogeneration mode where the gas turbine 160 can be coupled to one or more HRSGs (not shown), and steam produced from the HRSGs may be exported to an external process (not shown) in addition to power from the gas turbine. The cogeneration mode may further include a steam turbine 170, which may include extraction steam that may be exported to the external process in addition to producing power for the grid 150. The operational mode of the power plant 105 may further include operating at full power (also called baseload operation), operating at part power (also called part load operation) or operating in islanding mode.

The controller 180 can further receive a set of measured performance parameters at a current operation conditions 195 of the at least one turbine, such as the gas turbine 160. Furthermore, the controller 180 can receive an operating limit line (OLL) of the compressor (110) and a compressor pressure ratio (CPR) at the current operating condition of the at least one turbine, for example, the gas turbine 160.

The OLL of the compressor 110 can be a curve that defines an operational boundary of the compressor 110 and can be a function of the CPR and a speed corrected airflow (not shown in FIG. 1). The OLL can be offset from a surge limit of the compressor 110 by a margin that can be based on the operational mode of the gas turbine 160.

The CPR can be based at least in part on a discharge pressure (Pdisch) of the compressor 110 and an ambient pressure (P_{amb}). As a simplification, the CPR can be represented by the equation: CPR = Pdisch/Pamb.

The controller 180 can further execute a comparison of the CPR to an operating limit pressure ratio on the OLL at current operating conditions. Based at least in part on the comparison, a difference between the CPR and the operating limit pressure ratio exceeding a predetermined threshold can be determined. Furthermore, based at least in part on the difference between the CPR and the operating limit pressure ratio, the selection of the desired performance parameter 190, and the set of measured performance parameters 195, one or more response actions can be implemented (not shown in FIG. 1).

As desired, embodiments of the disclosure may include a system 100 with more or fewer components than are illustrated in FIG. 1. Additionally, certain components of the system 100 may be combined in various embodiments of the disclosure. The system 100 of FIG. 1 is provided by way of example only.

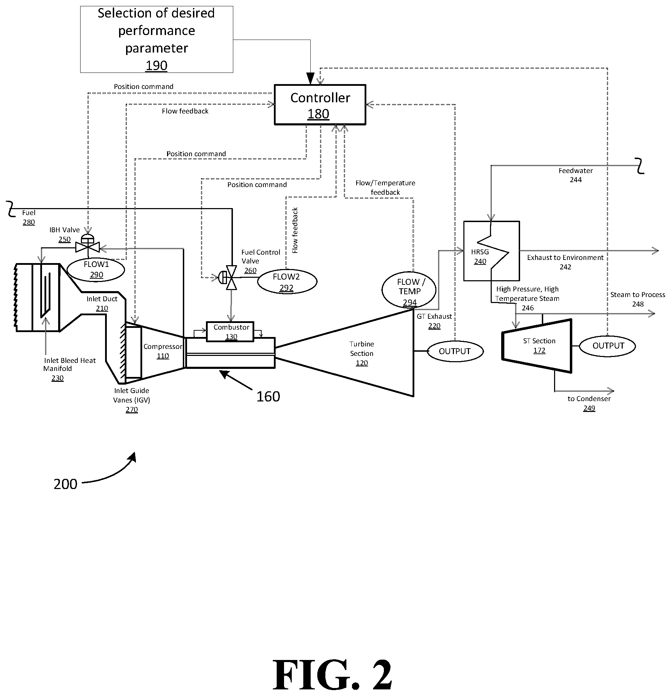

Referring now to FIG. 2, an example embodiment of the disclosure is shown that may include a system 200 in a combined cycle or cogeneration operational mode of the power plant 105. As shown in FIG. 2, in certain embodiments, additional details associated with the gas turbine 160 can include an inlet bleed heat (IBH) manifold 230 and an IBH valve 250 that can regulate recirculated air from the compressor 110 discharge back into an inlet duct 210, an inlet guide vane (IGV) 270 that can regulate air flow to the compressor 110, a fuel control valve 260 that can regulate the amount of fuel 280 being injected to the gas turbine 160, and an exhaust gas stream of the gas turbine 220, from which energy can be further extracted at a heat recovery steam generator (HRSG) 240. The HRSG can recover energy from the GT exhaust 220 to convert feedwater 244 into high pressure, high temperature steam 246, which can be expanded in the steam turbine section 172 to produce power. In the cogeneration operational mode of the power plant 105, the high pressure, high temperature steam 246 may also be sent to a downstream process, as indicated by steam to process 246 in FIG. 2.

In certain embodiments, the IGV 270 may be a single row of blades upstream of the compressor. In certain other embodiments the IGV 270 may include variable rows of vanes, in which case it may be termed as variable guide vanes (VGV). Some gas turbines 160 may have multiple rows of IGVs 270 or VGVs.

Referring again to FIG. 2, also shown are the input and output signals to and from the controller 180 to the IBH valve 250, the IGV 270, and the fuel control valve 260 in order to implement the one or more response actions. The controller 180 can manage IBH flow based on a flow feedback from flow1 station 290 and a position command to the IBH valve 250. Similarly, fuel flow to the gas turbine 160 can be managed via a position command to the fuel control valve 260 with a corresponding flow feedback signal from flow2 station 292. The controller may manage the IGV 270 position based on a position command. In addition, flow or temperature feedback can also be acquired from the flow/temp station 294 at GT exhaust 220.

In an example implementation of the system shown in FIG. 2, based on the selection of the desired performance parameter 190, the one or more response actions can be implemented via the control system of the turbine, such as, for example, via the controller 180 of the gas turbine 160, by one or more actions of: initiating an IBH flow increase by way of increasing an opening of the IBH valve 250, initiating an IGV 270 opening that can increase an air flow through the compressor 110, and which can subsequently lead to an increase in the gas turbine exhaust flow 220, and initiating a fuel stroke reference (FSR) suppression that can cause a reduction in fuel flow (flow2 292) to the gas turbine 160.

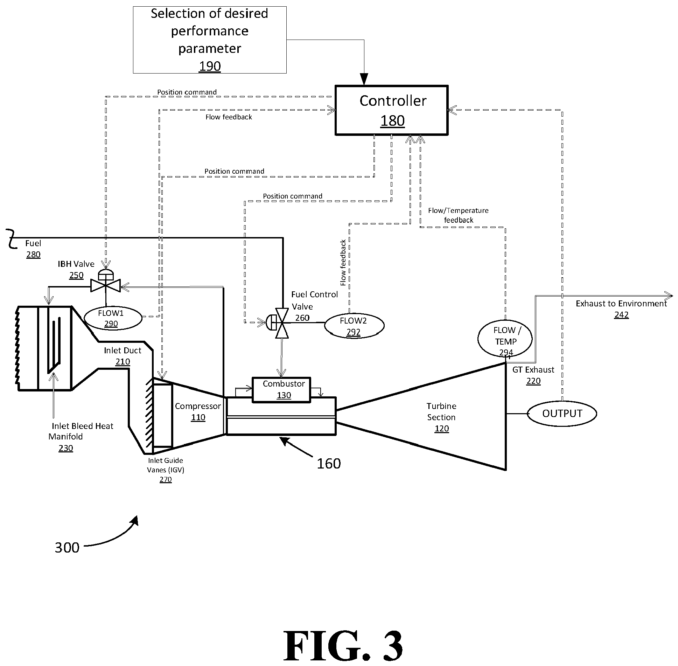

Referring now to FIG. 3, an example embodiment of the disclosure is shown that may include an example system 300 in a simple cycle operational mode of the power plant 105. In contrast with the example system of FIG. 2, the example system 300 does not include a HRSG 240, a ST section 172 or steam to process 248. In the simple cycle operational mode of the power plant 105, only the gas turbine 160 operates to produce power. Rest of the functionality of the controller 180 as well as the gas turbine 160 and associated control loops may be identical to those described in the preceding description for FIG. 2.

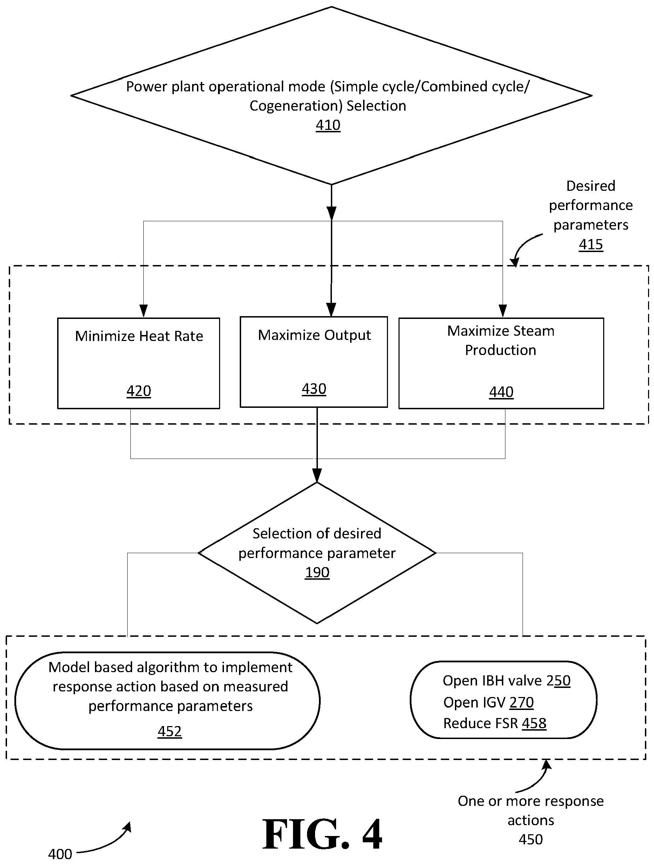

Referring now to FIG. 4, an example embodiment of the disclosure is shown that may include an example implementation 400 of the system 100 of FIG. 1. Based on the GT operational mode (for example, simple cycle or combined cycle or cogeneration) selection block 410, one or more desired performance parameters 415 may be selected. The desired performance parameters can include, but are not limited to, minimizing heat rate 420, maximizing output 430, and maximizing steam production 440. Other desired performance parameters can include, but are not limited to, minimizing environmental emissions, minimizing water consumption, and so on. Based on the selection of the desired performance parameters 190, one or more response actions 450 may be implemented. The one or more response actions 450 can include, but are not limited to, initiating IBH flow increase by opening the IBH valve 250, initiating IGV 270 opening that can increase an air flow through the compressor 110, and initiating FSR suppression that can reduce a fuel 280 flow (flow2 292) to the turbine (gas turbine 160). The sequence of the one or more response actions 190 to be implemented can be based at least in part on the selection of the desired performance parameter 190. As an example, if maximizing output 430 is chosen as the desired performance parameter 190, the sequence of implementing a compressor 110 OLL protection may include first opening the IBH valve 250, followed by initiating an IGV 270 opening, and finally reducing fuel flow (flow2 292) to the gas turbine 160. In other embodiments, if a different desired performance parameter, such as, for example, maximizing steam production 440 is chosen, the sequence of the one or more response actions 450 may be different.

Referring again to FIG. 4, implementing the one or more response actions can also include analyzing the received set of measured performance parameters at the current operating condition of the turbine (195 of FIG. 1) using a model based controls methodology 452, where the model based controls methodology 452 can determine the sequence and number of the one or more response actions that can be implemented.

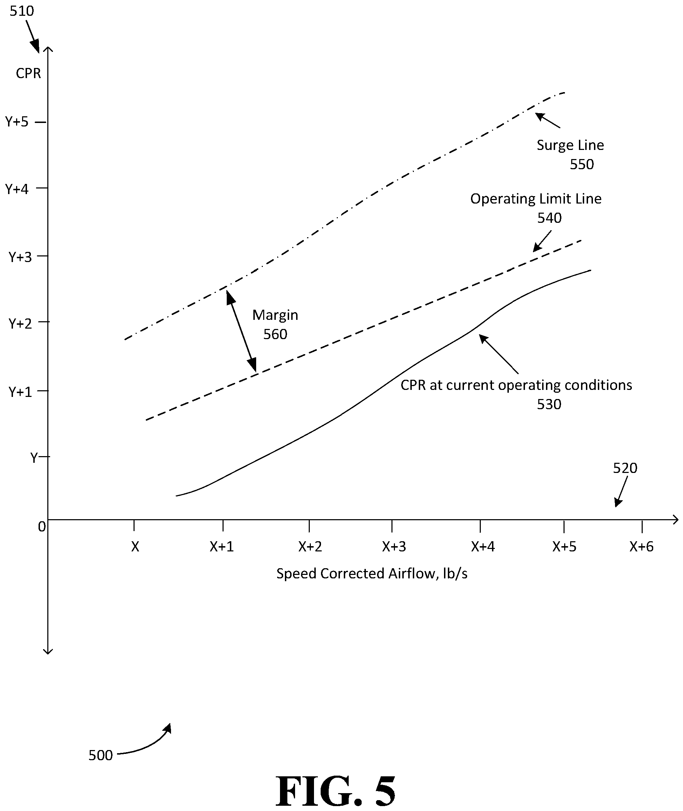

Referring now to FIG. 5, a graph 500 illustrating an example compressor map is shown in accordance with an example embodiment of the disclosure. As shown in FIG. 5, the graph 500 may include a y-axis 510 corresponding to compressor pressure ratio (CPR) and an x-axis 520 corresponding to speed corrected airflow in pounds (lb) per second. The operating limit line (OLL) 540 can be offset from the surge line by a margin 560. Also indicated is the CPR at current operating conditions 530. According to an example embodiment of the disclosure, the method of controlling the turbine in the power plant can include comparing the CPR at current operating conditions 530 to an operating limit pressure ratio on the OLL 540 at the current operating condition of the turbine, such as the gas turbine 160.

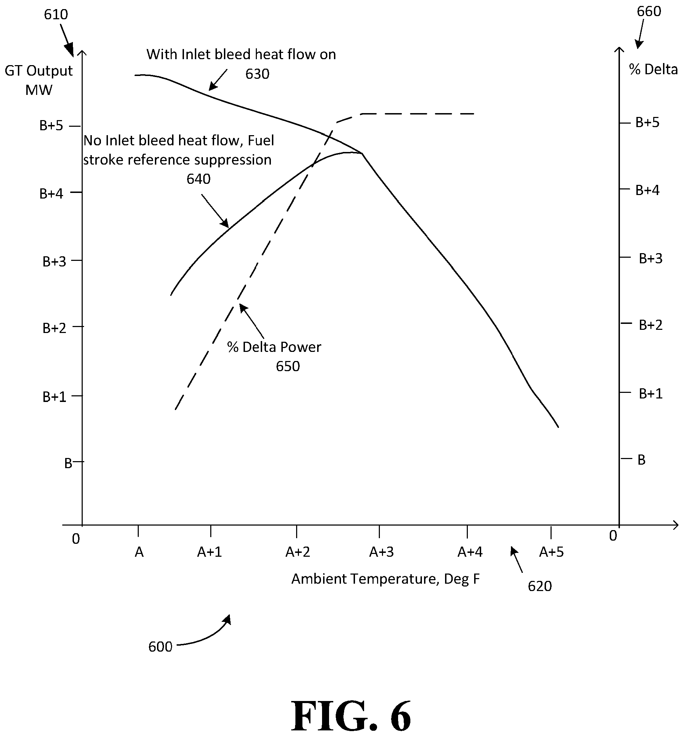

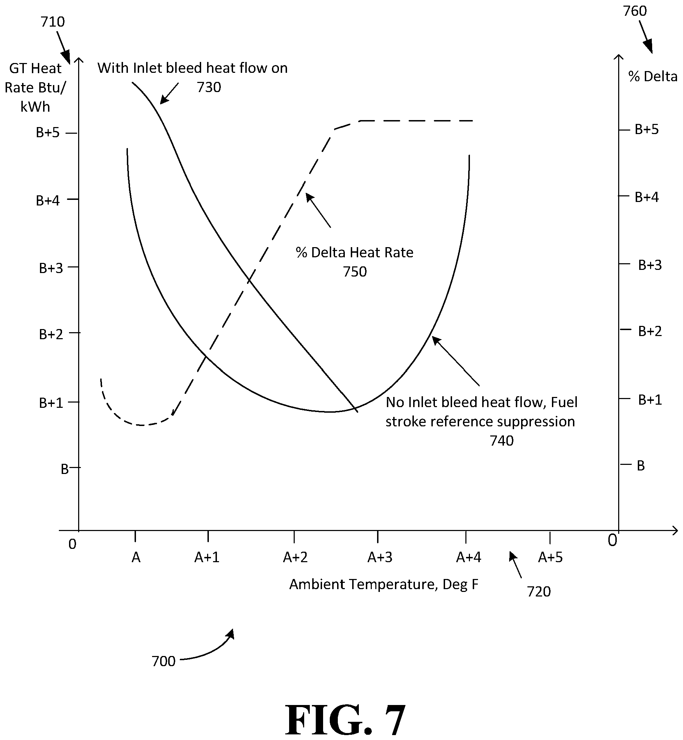

FIG. 6 and FIG. 7 depict an example embodiment of a method to control performance via control of compressor OLL protection actions and its impact on gas turbine power and gas turbine heat rate respectively.

Referring now to FIG. 6, shown is a graph 600 illustration an example implementation of the method to optimize performance via control of compressor OLL protection actions. As shown in FIG. 6, the graph 600 may include a primary y-axis 610 corresponding to gas turbine 160 power in megawatts (MW), a secondary y-axis 660 corresponding to a % delta in gas turbine 160 power and an x-axis 620 corresponding to ambient temperature in degrees Fahrenheit (°F). In this example implementation, the one or more response actions 450 can include a case with inlet bleed heat on 630, and an alternate case with no inlet bleed heat flow, but with FSR suppression 640 to control the compressor 110 OLL protection. As indicated in FIG. 4, % delta power 650 between the alternate case with no inlet bleed heat flow, FSR suppression 640 and the first case with inlet bleed heat flow on 630 increases with ambient temperature.

Now referring to FIG. 7, shown is a graph 700 illustrating the same example implementation of the method to control performance via control of compressor OLL protection actions as in FIG. 6, where the graph 700 may include a primary y-axis 710 corresponding to gas turbine 160 heat rate in BTU/kWh, a secondary y-axis 760 corresponding to a % delta in gas turbine 160 heat rate and an x-axis 720 corresponding to ambient temperature in degrees Fahrenheit (°F). As indicated in FIG. 7, the curves for the inlet bleed heat flow on 730 and no inlet bleed heat flow, FSR suppression 740 show different trends, and it can be observed that the % delta heat rate 750 between the two cases has a minimum at a low ambient temperature 720 condition.

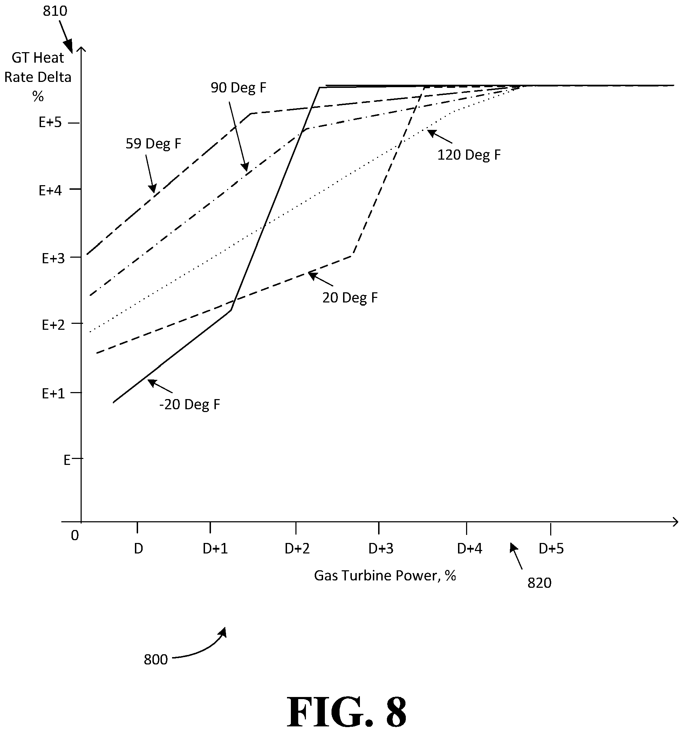

Now referring to FIG. 8, shown is a graph 800 illustrating an example implementation of a method to control performance via control of compressor 110 OLL protection action with IBH flow on at various ambient temperature conditions. The graph 800 may include a y-axis 810 corresponding to gas turbine 160 heat rate delta in %, as in the secondary y-axis of FIG. 7 and an x-axis 820 corresponding to gas turbine power in percentage. Graph 800 depicts the impact of implementing OLL protection action with IBH on (630 or 730) as a function of gas turbine part loads for various ambient temperature conditions, namely, about -20 degrees Fahrenheit (°F), about 20 degrees Fahrenheit (°F), about 59 degrees Fahrenheit (°F), about 90 degrees Fahrenheit (°F), and about 120 degrees Fahrenheit (°F).

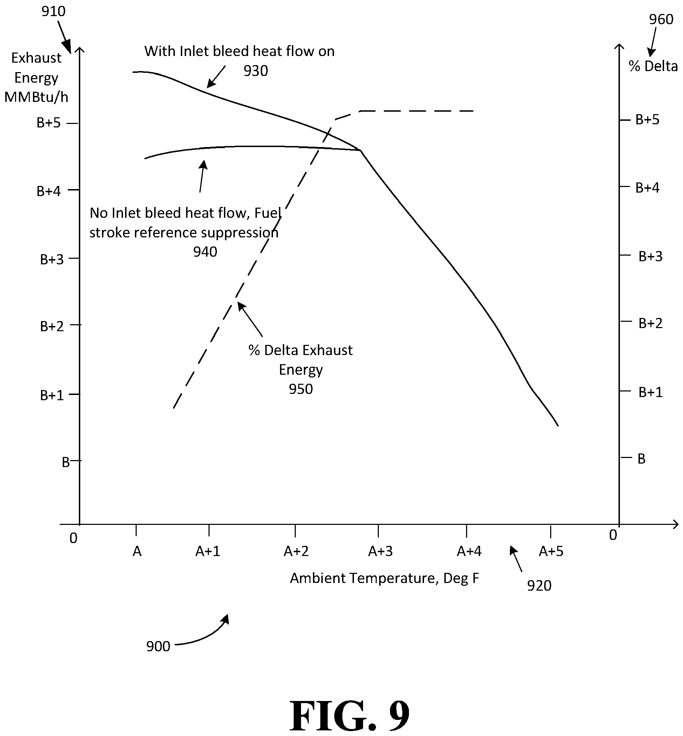

FIG. 9 shows a graph 900 illustrating another example implementation of a method to control performance via control of compressor OLL protection action. As shown in FIG. 9, the graph 900 may include a primary y-axis 910 corresponding to gas turbine 160 exhaust energy in MMBtu/h, a secondary y-axis 960 corresponding to a % delta in gas turbine 160 exhaust energy and an x-axis 920 corresponding to ambient temperature in degrees Fahrenheit. As depicted in FIG. 9, at lower ambient temperatures, the % delta in exhaust energy 950 (negative value) between the scenario with inlet bleed heat flow on 930 and the one with no inlet bleed heat flow, FSR suppression 940 increases.

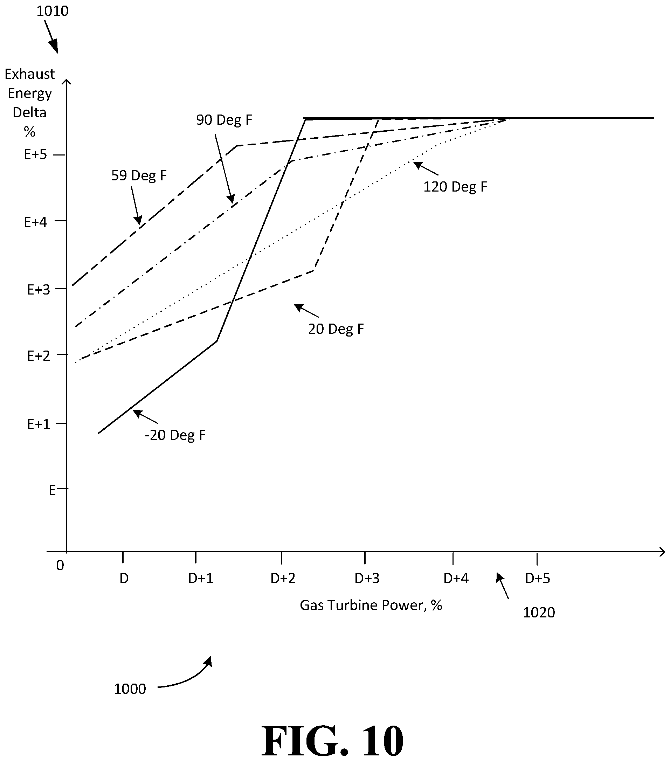

Referring now to FIG. 10, shown is a graph 1000 illustrating an example implementation of a method to control performance via control of compressor OLL protection action with IBH flow on (930) at various ambient temperature conditions. The graph 1000 may include a y-axis 1010 corresponding to gas turbine 160 exhaust energy delta in %, as in the secondary y-axis of FIG. 9 and an x-axis 1020 corresponding to gas turbine power in percentage. Graph 1000 depicts the impact of implementing OLL protection action with IBH on (930) as a function of gas turbine part loads for various ambient temperature conditions, namely, about -20 degrees Fahrenheit (°F), about 20 degrees Fahrenheit (°F), about 59 degrees Fahrenheit (°F), about 90 degrees Fahrenheit (°F), and about 120 degrees Fahrenheit (°F).

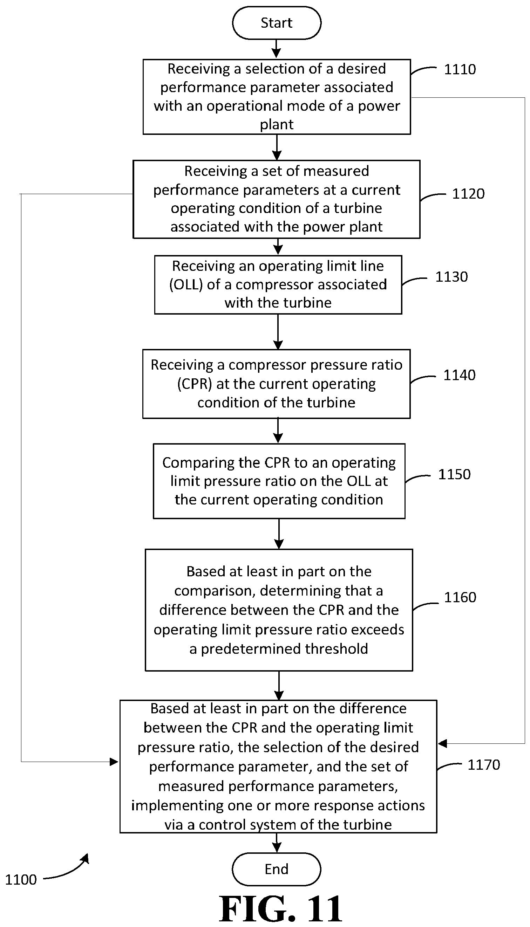

Referring now to FIG. 11, a flow diagram of an example method 1100 to control performance via control of compressor OLL protection actions is shown, according to an example embodiment of the disclosure. The method 1100 may be utilized in association with various systems, such as the system 100 illustrated in FIG. 1, the system 200 illustrated in FIG. 2, the system 300 illustrated in FIG. 3, and/or the system 400 illustrated in FIG. 4.

The method 1100 may begin at block 1110. At block 1110, a selection of a desired performance parameter 190 associated with an operational mode of a power plant 410 may be received. Next, at block 1120, the method 1100 may include receiving a set of measured performance parameters at a current operating condition 195 of a turbine associated with the power plant. At block 1130, the method 1100 may further include receiving an operating limit line (OLL) 540 of a compressor 110 associated with the turbine, such as, for example, the gas turbine 160 of FIG. 1. Next at block 1140, the method 1100 may further include receiving a compressor pressure ratio (CPR) at the current operating condition 530 of the turbine 160. At block 1150, the method 1100 can include comparing the CPR to an operating limit pressure ratio on the OLL 540 at the current operating condition of the turbine. Further at block 1160, the method 1100 can include determining that a difference between the CPR 530 and the operating limit pressure ratio exceeds a predetermined threshold, based at least in part on the comparison in block 1150. Furthermore, at block 1170, the method 1100 may include implementing one or more response actions 450 via a control system of the turbine, such as, for example, the controller 180 of FIG. 1, based at least in part on the difference between the CPR 530 and the operating limit pressure ratio, the selection of the desired performance parameter 190, and the set of measured performance parameters 195.

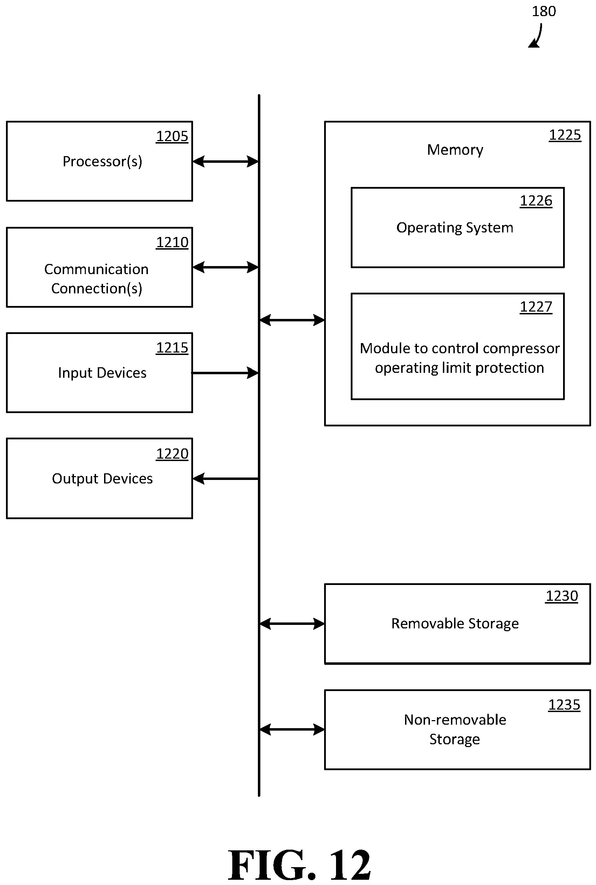

Attention is now drawn to FIG. 12, which illustrates an example controller 180 configured for implementing certain systems and methods to control performance via control of compressor OLL protection actions in accordance with certain embodiments of the disclosure. The controller can include a processor 1205 for executing certain operational aspects associated with implementing certain systems and methods to control performance via control of compressor OLL protection actions in accordance with certain embodiments of the disclosure. The processor 1205 can be capable of communicating with a memory 1225. The processor 1205 can be implemented and operated using appropriate hardware, software, firmware, or combinations thereof. Software or firmware implementations can include computer-executable or machine-executable instructions written in any suitable programming language to perform the various functions described. In one embodiment, instructions associated with a function block language can be stored in the memory 1225 and executed by the processor 1205.

The memory 1225 can be used to store program instructions that are loadable and executable by the processor 1205 as well as to store data generated during the execution of these programs. Depending on the configuration and type of the controller 180, the memory 1225 can be volatile (such as random access memory (RAM)) and/or non-volatile (such as read-only memory (ROM), flash memory, etc.). In some embodiments, the memory devices can also include additional removable storage 1230 and/or non-removable storage 1235 including, but not limited to, magnetic storage, optical disks, and/or tape storage. The disk drives and their associated computer-readable media can provide non-volatile storage of computer-readable instructions, data structures, program modules, and other data for the devices. In some implementations, the memory 1225 can include multiple different types of memory, such as static random access memory (SRAM), dynamic random access memory (DRAM), or ROM.

The memory 1225, the removable storage 1230, and the non-removable storage 1235 are all examples of computer-readable storage media. For example, computer-readable storage media can include volatile and non-volatile, removable and non-removable media implemented in any method or technology for storage of information such as computer-readable instructions, data structures, program modules or other data. Additional types of computer storage media that can be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the devices. Combinations of any of the above should also be included within the scope of computer-readable media.

Controller 180 can also include one or more communication connections 1210 that can allow a control device (not shown) to communicate with devices or equipment capable of communicating with the controller 180. The controller can also include a computer system (not shown). Connections can also be established via various data communication channels or ports, such as USB or COM ports to receive cables connecting the controller 180 to various other devices on a network. In one embodiment, the controller 180 can include Ethernet drivers that enable the controller 180 to communicate with other devices on the network. According to various embodiments, communication connections 1210 can be established via a wired and/or wireless connection on the network.

The controller 180 can also include one or more input devices 1215, such as a keyboard, mouse, pen, voice input device, gesture input device, and/or touch input device. It can further include one or more output devices 1220, such as a display, printer, and/or speakers.

In other embodiments, however, computer-readable communication media can include computer-readable instructions, program modules, or other data transmitted within a data signal, such as a carrier wave, or other transmission. As used herein, however, computer-readable storage media do not include computer-readable communication media.

Turning to the contents of the memory 1225, the memory 1225 can include, but is not limited to, an operating system (OS) 1226 and one or more application programs or services for implementing the features and aspects disclosed herein. Such applications or services can include a module to control compressor operating limit protection 1227 for executing certain systems and methods to control performance via control of compressor OLL protection actions. The module to control compressor operating limit protection 1227 can reside in the memory 1225 or can be independent of the controller 180. In one embodiment, the module to control compressor operating limit protection 1227 can be implemented by software that can be provided in configurable control block language and can be stored in non-volatile memory. When executed by the processor 1205, the module to control compressor operating limit protection 1227 can implement the various functionalities and features associated with the controller 180 described in this disclosure.

As desired, embodiments of the disclosure may include a controller 180 with more or fewer components than are illustrated in FIG. 12. Additionally, certain components of the controller 180 of FIG. 12 may be combined in various embodiments of the disclosure. The controller 180 of FIG. 12 is provided by way of example only.

References are made to block diagrams of systems, methods, apparatuses, and computer program products according to example embodiments. It will be understood that at least some of the blocks of the block diagrams, and combinations of blocks in the block diagrams, may be implemented at least partially by computer program instructions. These computer program instructions may be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed.

These computer program instructions may also be stored in a non-transitory computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide task, acts, actions, or operations for implementing the functions specified in the block or blocks.

One or more components of the systems and one or more elements of the methods described herein may be implemented through an application program running on an operating system of a computer. They also may be practiced with other computer system configurations, including hand-held devices, multiprocessor systems, microprocessor based or programmable consumer electronics, mini-computers, mainframe computers, and the like.

Application programs that are components of the systems and methods described herein may include routines, programs, components, data structures, and so forth that implement certain abstract data types and perform certain tasks or actions. In a distributed computing environment, the application program (in whole or in part) may be located in local memory or in other storage. In addition, or alternatively, the application program (in whole or in part) may be located in remote memory or in storage to allow for circumstances where tasks may be performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated that the disclosure may be embodied in many forms and should not be limited to the example embodiments described above.

Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiments of the present invention are defined by the following clauses:
1. A method of controlling a turbine in a power plant, the method comprising:
   receiving a selection of a desired performance parameter associated with an operational mode of a power plant;
   receiving a set of measured performance parameters at a current operating condition of a turbine associated with the power plant;
   receiving an operating limit line (OLL) of a compressor associated with the turbine;
   receiving a compressor pressure ratio (CPR) at the current operating condition of the turbine;
   comparing the CPR to an operating limit pressure ratio on the OLL at the current operating condition of the turbine;
   based at least in part on the comparison, determining that a difference between the CPR and the operating limit pressure ratio exceeds a predetermined threshold; and
   based at least in part on the difference between the CPR and the operating limit pressure ratio, the selection of the desired performance parameter, and the set of measured performance parameters, implementing one or more response actions via a control system of the turbine.
2. The method of clause 1, wherein implementing the one or more response actions via the control system of the turbine comprises:
   initiating an inlet bleed heat flow increase;
   initiating an inlet guide valve opening operable to increase an air flow through the compressor; and
   initiating a fuel stroke reference suppression operable to reduce a fuel flow to the turbine.
3. The method of clause 1, wherein the desired performance parameter comprises at least one of: a maximum output, a minimum heat rate, or a maximum steam production rate.
4. The method of clause 1, wherein the CPR is based at least in part on a discharge pressure of the compressor and an ambient pressure.
5. The method of clause 1, wherein a sequence of the one or more response actions is based at least in part on the selection of the desired performance parameter.
6. The method of clause 1, wherein the operational mode of the power plant comprises one of: a combined cycle mode, a simple cycle mode, or a cogeneration mode.
7. The method of clause 1, wherein implementing the one or more response actions comprises:
   analyzing, using a model based controls methodology, the received set of measured performance parameters at the current operation condition of the turbine.
8. The method of clause 1, wherein the OLL is offset from a surge limit line by a margin.
9. A system comprising:
   at least one turbine;
   a controller in communication with the at least one turbine, and comprising a memory with computer-readable instructions operable to:
      receive a selection of a desired performance parameter associated with an operation of a power plant;
      receive a set of measured performance parameters at a current operating condition of the at least one turbine associated with the power plant;
      receive an operating limit line (OLL) of a compressor associated with the at least one turbine;
      receive a compressor pressure ratio (CPR) at the current operating condition of the at least one turbine;
      compare the CPR to an operating limit pressure ratio on the OLL at current operating conditions;
      based at least in part on the comparison, determine that a difference between the CPR and the operating limit pressure ratio exceeds a predetermined threshold; and
      based at least in part on the difference between the CPR and the operating limit pressure ratio, the selection of the desired performance parameter, and the set of measured performance parameters, implement one or more response actions via a control system of the at least one turbine.
10. The system of clause 9, wherein the one or more response actions are further operable to:
   initiate an inlet bleed heat flow increase;
   initiate an inlet guide valve opening to increase an air flow through the compressor; and
   initiate a fuel stroke reference suppression to reduce a fuel flow to the at least one turbine.
11. The system of clause 9, wherein the desired performance parameter comprises at least one of: a maximum output, a minimum heat rate or a maximum steam production rate.
12. The system of clause 9, wherein the CPR is based at least in part on a discharge pressure of the compressor and an ambient pressure.
13. The system of clause 9, wherein a sequence of the one or more response actions is based in part on the selection of the desired performance parameter.
14. The system of clause 9, wherein the OLL is offset from a surge limit line by a margin.
15. The system of clause 9, wherein the one or more response actions is based at least in part an operation mode of the at least one turbine, wherein the operation mode of the at least one turbine comprises: a combined cycle mode, a simple cycle mode, and a cogeneration mode.
16. The system of clause 9, wherein the controller further comprises a model based algorithm, wherein the model based algorithm is based on the received set of measured parameters.
17. A non-transitory computer-readable medium comprising instructions executable by a computer for performing operations comprising:
   receiving a selection of a desired performance parameter associated with an operational mode of a power plant;
   receiving a set of measured performance parameters at a current operating condition of a turbine associated with the power plant;
   receiving an operating limit line (OLL) of a compressor associated with the turbine;
   receiving a compressor pressure ratio (CPR) at the current operating condition of the turbine;
   comparing the CPR to an operating limit pressure ratio on the OLL at the current operating condition of the turbine;
   based at least in part on the comparison, determining that a difference between the CPR and the operating limit pressure ratio exceeds a predetermined threshold; and
   based at least in part on the difference between the CPR and the operating limit pressure ratio, the selection of the desired performance parameter, and the set of measured performance parameters, implementing one or more response actions via a control system of the turbine.
18. The computer-readable medium of clause 17, wherein the one or more response actions comprise:
   initiating an inlet bleed heat flow increase;
   initiating an inlet guide valve opening to increase air flow through the compressor; and
   initiating a fuel stroke reference suppression to reduce fuel flow to the turbine.
19. The computer-readable medium of clause 17, wherein a sequence of the one or more response actions is based at least in part on the selection of the desired performance parameter.
20. The computer-readable medium of clause 17, wherein the desired performance parameter comprises at least one of: a maximum output, a minimum heat rate, or a maximum steam production rate.

## Claims

1. A system (100) comprising:
at least one turbine (160);
a controller (180) in communication with the at least one turbine (160), and comprising a memory (1225) with computer-readable instructions operable to:
receive a selection of a desired performance parameter (190) associated with an operation of a power plant (105);
receive a set of measured performance parameters at a current operating condition (195) of the at least one turbine (160) associated with the power plant (105);
receive an operating limit line (OLL) (540) of a compressor (110) associated with the at least one turbine (160);
receive a compressor pressure ratio (CPR) (530) at the current operating condition of the at least one turbine (160);
compare the CPR (530) to an operating limit pressure ratio on the OLL at current operating conditions;
based at least in part on the comparison, determine that a difference between the CPR (530) and the operating limit pressure ratio exceeds a predetermined threshold; and
based at least in part on the difference between the CPR (530) and the operating limit pressure ratio, the selection of the desired performance parameter (190), and the set of measured performance parameters (195), implement one or more response actions (450) via a control system (180) of the at least one turbine (160).

2. The system (100) of claim 1, wherein the one or more response actions (450) are further operable to:
initiate an inlet bleed heat flow (290) increase;
initiate an inlet guide valve (270) opening to increase an air flow through the compressor (110); and
initiate a fuel stroke reference suppression to reduce a fuel flow (292) to the at least one turbine (160).

3. The system (100) of claim 1 or 2, wherein the desired performance parameter (190) comprises at least one of: a maximum output (430), a minimum heat rate (420) or a maximum steam production rate (440).

4. The system (100) of any one of claims 1 to 3, wherein the CPR is based at least in part on a discharge pressure of the compressor and an ambient pressure.

5. The system (100) of any one of claims 1 to 4, wherein a sequence of the one or more response actions (450) is based in part on the selection of the desired performance parameter (190).

6. The system (100) of any one of claims 1 to 5, wherein the one or more response actions (450) is based at least in part an operation mode (410) of the at least one turbine (160), wherein the operation mode (410) of the at least one turbine comprises: a combined cycle mode, a simple cycle mode, and a cogeneration mode.

7. The system (100) of any one of claims 1 to 6, wherein the controller further comprises a model based algorithm, wherein the model based algorithm is based on the received set of measured parameters.

8. A method (1100) of controlling a turbine (160) in a power plant (105), the method (1100) comprising:
receiving (1110) a selection of a desired performance parameter (190) associated with an operational mode (410) of a power plant (105);
receiving (1120) a set of measured performance parameters (195) at a current operating condition of a turbine (160) associated with the power plant (105);
receiving (1130) an operating limit line (OLL) (540) of a compressor (110) associated with the turbine (160);
receiving (1140) a compressor pressure ratio (CPR) (530) at the current operating condition of the turbine (160);
comparing (1150) the CPR (530) to an operating limit pressure ratio on the OLL at the current operating condition of the turbine (160);
based at least in part on the comparison, determining (1160) that a difference between the CPR (530) and the operating limit pressure ratio exceeds a predetermined threshold; and
based at least in part on the difference between the CPR (530) and the operating limit pressure ratio, the selection of the desired performance parameter (190), and the set of measured performance parameters (195), implementing (1170) one or more response actions (450) via a control system (180) of the turbine (160).

9. The method (1100) of claim 8, wherein implementing the one or more response actions (450) via the control system (180) of the turbine (160) comprises:
initiating an inlet bleed heat flow (290) increase;
initiating an inlet guide valve (270) opening operable to increase an air flow through the compressor (110); and
initiating a fuel stroke reference suppression operable to reduce a fuel flow (292) to the turbine (160).

10. The method (1100) of claim 8 or 9, wherein the desired performance parameter (190) comprises at least one of: a maximum output (420), a minimum heat rate (430), or a maximum steam production rate (440).

11. The method (1100) of any one of claims 8 to 10, wherein the CPR is based at least in part on a discharge pressure of the compressor and an ambient pressure.

12. The method (1100) of any one of claims 8 to 11, wherein a sequence of the one or more response actions (450) is based at least in part on the selection of the desired performance parameter (190).

13. The method (1100) of any one of claims 8 to 12, wherein the operational mode of the power plant comprises one of: a combined cycle mode, a simple cycle mode, or a cogeneration mode.

14. The method (1100) of any one of claims 8 to 13, wherein implementing the one or more response actions (450) comprises:
analyzing, using a model based controls methodology (452), the received set of measured performance parameters at the current operation condition (195) of the turbine (160).

15. The method (1100) of any one of claims 8 to 14, wherein the OLL is offset from a surge limit line by a margin.
